# EUROPEAN PATENT APPLICATION

(11) **EP 1 717 203 A1**
(43) Date of publication of application: **02.11.2006**
(21) Application number: 05075995.0
(22) Date of filing: 26.04.2005
(51) Int. Cl.: C01G 23/02, B01J 8/24

(54) **Production of titanium tetrachloride using a fluidized bed reactor**

(71) Applicant: Kerr-McGee Corporation, Oklahoma City, OK 73125 (US)
(72) Inventor: Keegel, Machiel Kristen, 1829 XD Oudorp (NL); Katsman, Johannes Christiaan, 3344 CC Hendrik-Ido-Ambacht (NL); Kalmeijer, Robert Peter, 3181 WE Rozenburg (NL); Lans, Steven Christian, 2645 KS Delfgauw (NL); van Beek, Pieter Christoffel, 3225 TH Hellevoetsluis (NL)
(74) Representative: Winckels, Johannes Hubertus F.

(57) **Abstract**

The invention is directed to a process for the production of TiCl₄, in particular to such a process carried out using a fluidized bed process.

According to the present invention there is provided a process for the production of TiCl₄, which process comprises the steps of:
- feeding TiO₂ containing ore and coke to a fluidized bed chlorinator;
- the assessment of total gas flow entering said chlorinator;
- the measurement of the pressure drop inside said fluidized bed for a known height, the pressure drop across said fluidized bed and relating this to the composition of the fluidized bed.
- calculating set points for said TiO₂ containing ore and coke feed and adjusting said TiO₂ and coke feed accordingly.

## Description

The invention is directed to a process for the production of TiCl₄, in particular to such a process carried out using a fluidized bed reactor.

Titanium tetrachloride is typically produced by reacting titanium dioxide containing ore with chlorine in the presence of coke at a temperature of approximately 1000 °C in a fluidized bed reactor. The off-gas mainly contains the product TiCl₄ gas, together with CO gas, CO₂ gas and N₂ gas. In the chlorination step ore and coke should be available in large excess with respect to chlorine to ensure a complete reaction of chlorine. Incomplete conversion of chlorine leads to shutdown of the process, which is necessary to avoid venting chlorine to the environment. Incomplete conversion of chlorine also leads to chlorine loss, increased neutralization costs, fouling of downstream coolers, and vanadium contamination in the downstream process.

The control of the chlorination step is conventionally carried out by monitoring the composition of the chlorinator bed by taking samples at a regular interval (e.g. every two hour) and at the same time by keeping the pressure drop across the fluidized bed reactor constant. Typically, determining the composition involves measuring the density of a sample taken from the fluidized bed using a pycnometer. A complicating factor in this system is the presence of non-reactive silica in the bed, which builds up in time. Based on this information, the ore and coke feed can be adjusted, for instance by varying the open/close times of the blow pots system that is used to feed the reactants to the chlorinator. This system does not allow for an accurately controlled mass flow of ore and coke to the chlorinators. By result, the process has to be shut down regularly to avoid chlorine venting to the atmosphere. In addition, the ore and coke yield is low.

A further complicating factor is the presence of recycle streams in the process, for instance a recycle coming from an oxidation unit.

It is an object of the present invention to provide a chlorination process that is carried out in a fluidized bed reactor, which process does not have the above-mentioned disadvantages and allows automation of this chlorination process.

It was found that this object can be met by a process which combines an online measurement of reactant streams, in particular of the mass flow of ore, coke and total gas flow entering the chlorinator with an online density measurement of the chlorinator fluidized bed.

Thus the present invention relates to a process for the production of TiCl₄ comprising feeding TiO₂ containing ore and coke to a fluidized bed chlorinator, further comprising:
the assessment of gas flows entering said chlorinator, and
the measurement of the pressure drop inside said fluidized bed and the total pressure drop across said fluidized bed,
followed by calculating set points for said TiO₂ containing ore and coke feed and automatically adjusting said TiO₂ and coke feed accordingly on a continuous basis.

The present inventors found that the composition of the fluidized bed can be calculated conveniently and with a sufficient accuracy from density measured of the bed samples and the measurements of pressure drops across (Δ*P*_{*b*}) and inside the bed (Δ*P*_{*i*}, which is the pressure drop in the bed for a known bed height).

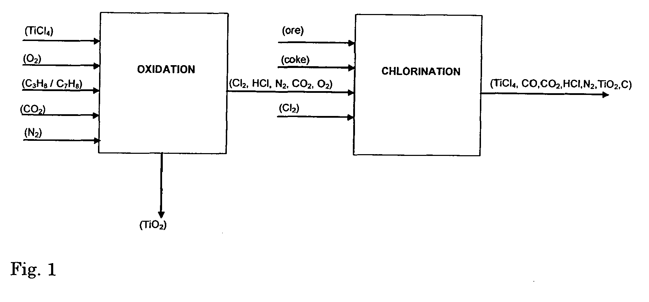

Typically, the production process of TiO₂ comprises an oxidation step and a chlorination step, see Figure 1. In the oxidation step TiCl₄ is combusted in the presence of an organic fuel (*e.g.* C₃H₈ and/or C₇H₈, the latter compound commonly being added to increase the flame temperature and to start the reaction between TiCl₄ and O₂) O₂, CO₂, and N₂. The flow of the gasses entering the oxidizer can be accurately measured. From these measurements, the products exiting from the oxidizer can be accurately calculated or measured. These product gasses are used as feed gas for the chlorinator and comprise mainly of Cl₂, HCl, N₂, CO₂, and O₂. Make-up Cl₂ can be added after oxidation. The flow of this make-up Cl₂ addition can also be measured accurately. Besides the feed gas, ore and coke are fed to the chlorinator.

The composition of the chlorinator feed gas can be calculated using the measurements of the gas flows that enter the oxidizer, the N₂ and the make-up Cl₂ added to the system after the oxidizer. The accuracy of this measurement is sufficient to form a basis for an efficient process control.

The Cl₂ in the chlorinator feed gas is a reaction product from oxidation of TiCl₄. Some Cl₂ is consumed by the H₂O that is liberated when the organic fuel reacts with oxygen to form HCl. The flow of Cl₂ entering the chlorinator can be calculated when the flow of O₂ entering the oxidizer is measured, together with the flow of TiCl₄ and the flow of the organic fuel. Make-up Cl₂ can be added to the chlorinators to compensate for Cl₂ losses in the system.

The O₂ in the chlorinator feed gas is the leftover O₂ after oxidation of TiCl₄ to TiO₂ in the oxidizer. To drive this reaction to completion, O₂ is added in excess. Also the combustion of the organic fuel consumes some O₂. The leftover O₂ is fed to the chlorinator. The flow of O₂ entering the chlorinator can be calculated when the flow of O₂ entering the oxidizer is measured, together with the flow of TiCl₄ and the flow of the organic fuel.

The N₂ added to the oxidizer is non-reactive and will all report to the chlorinator feed gas. The CO₂ in the chlorinator feed gas is the reaction product of the combustion of the organic fuel. It is also fed into the oxidizer as carrier gas for the scour sand. Scour sand is added to the oxidizer to prevent buildup of solids in the oxidizer. The flow of CO₂ entering the chlorinator can be calculated when the flow of carrier CO₂ entering the oxidizer is measured, together with the flow of the organic fuel.

The HCl in the chlorinator feed gas is the reaction product of the reaction between Cl₂ and H₂ originating from the organic fuel. The flow of HCl entering the chlorinator can be calculated when the flow of the organic fuel entering the oxidizer is measured.

By measuring the flow of the gasses entering the oxidizer, the flow of make-up Cl₂, and the flow of N₂, the composition of the chlorinator feed gas can be calculated.

Since all inputs to the chlorinator can be either measured (ore, coke and make-up Cl₂) or calculated (composition of the chlorinator feed gas), also the ore and coke consumption in the chlorinator can be calculated.

The ore entering the chlorinator is either consumed by the reaction with Cl₂ and coke, or leaves the chlorinator unreacted as blowover. The Cl₂ requirement for a ton of ore can be calculated and will not vary significantly. In the normal operating regime of the chlorinator, the unreacted blowover of ore is constant. This allows for an accurate calculation of ore consumption.

Coke entering the chlorinator is consumed by the reaction with O₂ in chlorinator feed gas, and by oxygen present in the TiO₂. Coke also leaves the chlorinator unreacted as blowover. The blowover of coke is assumed constant. The exact consumption of coke is dependant of the CO/CO₂ ratio of the chlorinator off-gas. For all practical purposes the CO/CO₂ ratio is assumed to be constant. By continuously measuring the CO/CO₂ ratio of the chlorinator off-gas, the accuracy of the calculation of coke consumption can be improved

As pointed out above, it is a challenge to operate a chlorinator with a tight control over the feed rates of the reactive components ore and coke. The major components of the chlorinator bed are ore, coke, and silica. Where ore and coke are highly reactive, silica is relatively inert and builds up in the chlorinator. However, the inventory of the silica only increases significantly in the order of days.

The chlorinator inventory can be continuously calculated by measuring the overall pressure drop over the fluidized bed (Δ*P*_{*b*}) and the internal pressure drop inside the fluidized bed (Δ*P*_{*i*}) over a fixed height (*h*). The bed mass can be calculated from Δ*P*_{*b*}, while the bed composition can be calculated from Δ*P*_{*i*}.

For the calculation of the bed composition also the mass of silica in the bed and the average density of the bed should be known. The total mass of the silica does not change significantly, and is therefore treated as a semi-constant. The value can be updated daily, based on a chlorinator bed sample that can be analyzed, together with the total bed mass at the time of sampling, to determine the silica content. The average density of the bed can be calculated from the internal pressure drop inside the fluidized bed and the porosity of the fluidized bed. This porosity does not change significantly with variations in operating conditions. The porosity value can be calculated from the density of the fluidized bed, which can be measured with a pycnometer by regularly taking a chlorinator bed sample, for example every two hours.

A tight control over the feed rates of ore and coke is achieved by a combination of an online measurement of reactant streams with online pressure drop measurements, thus allowing a computer control system to continuously set mass flow set points for the ore and coke feed and steer the chlorinator bed inventory to a desired target. As such the operation of the fluidized bed is automated.

In order to compensate for errors in the measurements of the pressure drops and the porosity value of the fluidized bed, several extra control steps may be added.

The instruments that carry out the pressure drop measurements are known to plug with bed solids if not purged regularly. Therefore, double measurements of Δ*P*_{*i*} and of Δ*P*_{*b*} may be carried out, whereby a deviation between these measurements can be a trigger to purge the measuring instruments.

The determination of the porosity value also introduces a small error. The porosity value is calculated from a regular sampling of the density of the fluidized bed. An average porosity value over at least two density measurements may be used. Preferably, the last three density measurements are used. Thereby the error in the porosity value is dampened over several data points. The average porosity value may be used until a new bed sample is entered, and then recalculated.

Another check may be used by considering the autocorrelation of the samples. Samples that are taken from mixed vessels where the contents have a relatively large residence time compared to the sampling interval are known to be autocorrelated. The residence time of the ore and coke in the chlorinator is in the order of five to ten hours. Therefore, the density values will be autocorrelated if the sampling interval is shorter, for example every two hours.

Two following measurements of the density of the fluidized bed can thus be compared. In practice, when a bed sample has a density that deviates 25 % from the previous sample, it is highly likely that the sample is incorrect and should therefore be discarded. Such a deviation could for example trigger the taking of an extra sample from the fluidized bed.

### Example 1

In the table below the availability of the automated control system in the second half of the year is shown. The availability is the total hours which the automated control system was used as a percentage of the total operating hours in a month. The remainder of the time, the system was controlled by an operator. Obviously, before introduction, the system was continuously controlled manually by an operator

| Month | % |
|---|---|
| July | 93.9 |
| August | 98.8 |
| September | 97.9 |
| October | 96.1 |
| November | 94.3 |
| December | 94.8 |

### Example 2

The first three months before implementation of the improved controls, the TiO₂ yield in chlorination was respectively 92.9%, 93.3% and 92.9%. The first three months after implementation of the improved controls, the TiO₂ yield in chlorination was 95.1, 95.0 and 95.0%, respectively. The improvement in TiO₂ yield before and after implementation was 2.0%.

## Claims

1. Process for the production of TiCl₄, which process comprises the steps of:
- feeding TiO₂ containing ore and coke to a fluidized bed chlorinator;
- the assessment of gas flows entering said chlorinator;
- the measurement of the pressure drop inside said fluidized bed for a known bed height and the pressure drop across said fluidized bed;
- calculating set points for said TiO₂ containing ore and coke feed and adjusting said TiO₂ and coke feed accordingly; and
- continuously adjusting said ore an coke feed using a computer control system.

2. Process according to claim 1, wherein said gas flows entering said chlorinator comprise a recycle stream from an oxidation process.

3. Process according to claim 2, wherein the assessment of gas flows entering said chlorinator comprises the measurement of gas flows entering said oxidation process.

4. Process according to any of the preceding claims comprising a regular sampling of the fluidized bed to measure the density of the fluidized bed.

5. Process according to any of the preceding claims comprising a regular sampling of the fluidized bed to analyze the silica content of the fluidized bed.

6. Process according to any of the preceding claims, wherein a double measure of the pressure drop inside said fluidized bed for a known bed height is performed and the deviation between the measurements is analyzed.

7. Process according to any of the preceding claims, wherein a double measure of the pressure drop across said fluidized bed is performed and the deviation between the measurements is analyzed.

8. Process according to any of the claims 4-7, wherein an average porosity of the fluidized bed is calculated from at least two porosity measurements.

9. Process according to any of the claims 4-8, wherein a second measurement of the density of said fluidized bed at a certain point in time is compared with a first measurement of the density of said bed at an earlier point in time, followed by comparing said first and said second measurement, optionally followed by discarding said second measurement if the difference between said first and said second measurement is too large.

10. Process according to claim 9, wherein said second measurement is discarded if said second measurement is more than 25 % larger or smaller than said first measurement.
